# DEMANDE DE BREVET EUROPEEN

(11) **EP 3 434 950 A1**
(43) Date de publication de la demande: **30.01.2019**
(21) Numéro de dépôt: 18188357.0
(22) Date de dépôt: 28.09.2016
(51) Int. Cl.: F16L 1/12

(54) **PROCÉDÉ DE VIDANGE D'UNE CANALISATION SOUS-MARINE DE TRANSPORT DE FLUIDE QUI EST IMMERGÉE ET REMPLIE D'EAU**

(30) Priorité: 26.10.2015 FR 1560192
(62) Demande divisionnaire de: 16785238.3
(71) Demandeur: SAIPEM S.A., 78180 Montigny Le Bretonneux (FR)
(72) Inventeur: BAILEY, Alexandre, 78140 VELIZY (FR)
(74) Mandataire: Cabinet Beau de Loménie

(57) **Abrégé**

L'invention concerne un procédé de vidange d'une canalisation sous-marine (2) de transport de fluide qui est immergée et remplie d'eau, comprenant le pompage d'une partie de l'eau présente à l'intérieur de la canalisation immergée par une unité submersible de pompage (6) raccordée en un point de la canalisation, le volume d'eau pompé à l'intérieur de la canalisation étant compensé par un gaz injecté sous pression dans la canalisation immergée en un point (18) de celle-ci située plus haut que le point de raccordement (12 ; 14) à l'unité submersible de pompage, et l'arrêt du pompage de l'eau présente à l'intérieur de la canalisation immergée dès détection qu'un volume prédéterminé d'eau a été pompé en amont et en aval de celle-ci. L'invention concerne également une installation pour la mise en oeuvre d'un tel procédé.

## Description

### Arrière-plan de l'invention

La présente invention se rapporte au domaine général des canalisations sous-marines reposant au fond de la mer ou assurant la liaison fond-surface pour le transfert d'hydrocarbures (ou de tout type de fluides utilisés pour la production de ces hydrocarbures), notamment pour le transport ou l'injection de gaz.

Elle concerne plus particulièrement un procédé permettant de vidanger des canalisations sous-marines qui reposent au fond de la mer et qui ont été soumises à différents tests préalables à leur mise en service ou à leur préservation avant un abandon temporaire plus ou moins long sur le fond marin, impliquant leur mise en eau douce ou en eau de mer.

Les canalisations sous-marines de transport d'hydrocarbures, notamment de gaz, doivent subir plusieurs tests préalablement à leur mise en service. Typiquement, ces opérations dites de « pre-commissioning » (pour « pré-mise en service ») regroupent des opérations de remplissage (en eau douce ou en eau de mer), de nettoyage, de calibrage, de tests sous pression, d'étanchéité, de vidange, de séchage, de mise en azote, etc. En particulier, au cours de ces opérations, les canalisations sont remplies d'eau de mer ou d'eau douce afin de tester notamment leur étanchéité et leur tenue à la pression ou bien pour les préserver sur le long terme. Une fois ces opérations de test ou de préservation effectuées, il est alors nécessaire de vidanger les canalisations immergées de leur eau de test ou de préservation afin de les mettre en production ou de récupérer une extrémité de celles-ci du fond de la mer afin de continuer leur installation.

Généralement, l'opération de vidange des canalisations immergées est réalisée à partir d'une structure de surface, par exemple une unité flottante de production, de stockage et de déchargement (également appelée FPSO pour « Floating Production Storage and Offloading » en anglais), d'une plateforme fixe, ou d'un bateau de construction dédié à cette opération. Sur cette structure de surface sont mobilisés pour ces opérations des équipements d'air comprimé à haute pression (pouvant inclure des équipements de génération d'azote) que l'on connecte à la liaison fond-surface de la canalisation immergée à vidanger (si les extrémités de celle-ci sont toutes les deux sous-marines, cette activité nécessite la mobilisation d'un flexible spécifique ou d'une unité de « coiled tubing » qui est un tube en acier déroulé d'une bobine de stockage). Un train de racleurs est ensuite poussé par l'air (ou l'azote) à haute pression ainsi injecté depuis la structure de surface dans la canalisation immergée, de sorte à chasser l'eau de test (ou de préservation) présente à l'intérieur de celle-ci d'une manière contrôlée en ajustant la vitesse d'avancement de ces racleurs. La canalisation est ensuite isolée (par rapport à son environnement) pour être soit remontée à la surface, soit mise directement en production.

Le dimensionnement des équipements d'air comprimé (et/ou de génération d'azote) à haute pression utilisés pour cette opération de vidange dépend de la profondeur à laquelle sont immergées les canalisations, ainsi que de leur longueur et de leur diamètre. En effet, plus la canalisation est longue et/ou large et plus elle est immergée en grande profondeur, plus le besoin d'un air (ou azote) fortement comprimé est nécessaire pour assurer une vidange des eaux de test remplissant ces canalisations.

Ainsi, pour des applications de plus en plus courantes dans lesquelles les canalisations font plusieurs dizaines, voire centaines, de kilomètres de long et sont immergées par des grandes profondeurs (c'est-à-dire au-delà de 400m de profondeur), les équipements utilisés en surface pour vidanger ces canalisations doivent être dimensionnés pour délivrer de l'air (ou azote) comprimé à de très hautes pressions, pouvant atteindre jusqu'à 200-250 bars.

Les équipements qui sont dimensionnés pour la vidange de ces canalisations immergées par grandes profondeurs sont donc très volumineux et encombrant ; ils exigent de disposer d'une surface d'emprise sur la structure qui les accueille qui est importante. Actuellement celle-ci est typiquement de l'ordre de 800 à 1200m² pour des équipements destinés à délivrer de l'air comprimé à des pressions pouvant atteindre 200-250 bars, ce qui nécessite de restreindre de manière importante la vitesse d'avancement des racleurs, à la conséquence que cela a en matière d'exécution du planning des bateaux de construction. Or, la place sur les structures de surface telles que les FPSO est par nature fortement limitée et peut contraindre de recourir à un navire additionnel pouvant accueillir les équipements d'air comprimé dédié à la vidange des canalisations, navires qui sont eux même limités en terme d'espace disponible.

Dans le cas où un bateau de construction est utilisé, une autre contrainte relative aux opérations de vidange de canalisations immergées par grandes profondeurs concerne le flexible (ou le « coiled tubing ») qui relie les équipements d'air (ou d'azote) comprimé à la canalisation immergée, ce flexible devant en effet pouvoir résister à l'écrasement hydrostatique inhérent aux grandes profondeurs en cas de dépressurisation contrôlée ou non de celui-ci.

### Objet et résumé de l'invention

La présente invention a donc pour but principal de proposer un procédé de vidange qui ne présente pas les inconvénients précités.

Conformément à l'invention, ce but est atteint grâce à un procédé de vidange d'une canalisation sous-marine de transport de fluide qui est immergée et remplie d'eau, comprenant le pompage d'une partie au moins de l'eau présente à l'intérieur de la canalisation immergée par une unité submersible de pompage raccordée en un point de la canalisation, le volume d'eau pompé à l'intérieur de la canalisation étant compensé par un gaz injecté sous pression dans la canalisation immergée en un point de celle-ci située plus haut que le point de raccordement à l'unité submersible de pompage.

Le procédé selon l'invention est remarquable notamment en ce que la vidange est réalisée par une unité submersible de pompage qui est immergée et raccordée à la canalisation. Cette unité de pompage vient aspirer l'eau présente à l'intérieur de la canalisation pour la rejeter directement dans la mer. Au cours du pompage, afin de compenser la perte de volume en eau à l'intérieur de la canalisation et d'éviter ainsi les phénomènes de cavitation et de désamorçage de l'unité de pompage qui en résulteraient, un gaz (par exemple de l'air ou de l'azote) sous pression est injecté dans la canalisation à partir d'un point plus haut de celle-ci (par rapport au point de raccordement de la canalisation à l'unité de pompage qui peut être soit aérien soit sous-marin).

Un tel procédé de vidange nécessite une installation simple et compact qui ne requiert notamment pas d'encombrer outre mesure une éventuelle structure de surface avoisinante (100 à 150 m² en lieu et place de 800 à 1200 m²). En effet, l'unité de pompage est submersible et peut être pilotée depuis un simple navire d'assistance (avec lequel elle est simplement reliée par un câble de puissance électrique). Quant à l'injection de gaz pour compenser le volume d'eau pompé, elle peut être réalisée par des moyens également submersibles ou bien embarqués à bord d'une structure de surface en ne prenant qu'une faible place sur celui-ci (la pression nécessaire à l'injection de gaz ne dépassant pas ici 50 bars, le dimensionnement d'une telle unité d'injection reste limité).

Selon un mode de réalisation relatif à la vidange partielle de canalisations abandonnées sur le fond marin par grandes profondeurs afin de procéder ultérieurement à sa récupération afin de terminer son installation, le procédé comprend en outre l'arrêt du pompage de l'eau présente à l'intérieur de la canalisation immergée dès détection qu'un volume prédéterminé d'eau a été pompé par l'unité submersible de pompage en amont et en aval de celle-ci, et l'isolation de l'unité submersible de pompage.

Dans ce mode de réalisation, le procédé peut comprendre en outre la dépressurisation de la canalisation immergée qui a été partiellement vidangée à une pression prédéterminée pour permettre son utilisation ultérieure comme canalisation de liaison fond-surface permanente une fois son installation terminée.

Lorsque le point le plus haut de la canalisation à vidanger est proche d'une structure de surface, l'introduction de gaz sous pression dans la canalisation immergée peut être réalisée à partir d'un ensemble de compresseurs basse-pression et d'unités de générations d'azote qui est installé sur une structure de surface et raccordé au point haut de la canalisation par un flexible.

Alternativement, lorsque le point le plus haut de la canalisation à vidanger est loin de toute structure de surface (ou que celle-ci ne peut pas accueillir d'équipements dédiés à l'injection de gaz), l'introduction de gaz sous pression dans la canalisation immergée peut être réalisée à partir d'un ensemble submersible de bouteilles d'azote à haute-pression qui est déposé sur le fond marin et raccordé au point haut de la canalisation par un flexible.

Dans ce mode de réalisation, l'introduction de gaz dans la canalisation immergée peut être réalisée à une pression relative estimée comprise entre 1 et 5 bars.

Selon un autre mode de réalisation relatif à la vidange totale et définitive de la canalisation immergée, le procédé comprend :
le lancement de racleurs à l'intérieur de la canalisation immergée depuis un point haut et un point bas de celle-ci en les poussant l'un vers l'autre grâce à du gaz injecté sous pression à l'intérieur de la canalisation ;
le pompage de l'eau présente à l'intérieur de la canalisation immergée par l'unité submersible de pompage raccordée en un point de la canalisation située entre le point haut et le point bas de celle-ci, le volume d'eau pompé à l'intérieur de la canalisation étant compensé par le gaz injecté sous pression dans la canalisation ;
dès détection de la présence de l'un des racleurs à une distance prédéterminée de l'unité submersible de pompage, l'arrêt de l'injection de gaz poussant ledit racleur et le début d'une dépressurisation de ladite canalisation par le point de la canalisation à partir duquel ledit racleur a été lancé ;
dès détection de la présence de l'autre racleur à une distance prédéterminée de l'unité submersible de pompage, l'arrêt de cette dernière et sa mise en isolement par rapport à la canalisation, la vidange totale de la canalisation étant obtenue en continuant d'injecter du gaz sous pression pour pousser les racleurs.

Dans ce mode de réalisation, la pressurisation et dépressurisation conjointes de la canalisation se poursuit de préférence jusqu'à ce que les racleurs soient récupérés. De plus, les racleurs peuvent être lancés à l'intérieur de la canalisation immergée à partir d'au moins une structure de surface (un FPSO et/ou une plate-forme offshore) sur lequel est installé un ensemble de compresseurs basse-pression et d'unités de générations d'azote.

Dans ce mode de réalisation, l'injection de gaz dans la canalisation immergée pour pousser les racleurs peut être réalisée à une pression relative comprise entre 5 et 50 bars.

L'invention a également pour objet une installation pour la mise en oeuvre du procédé tel que défini précédemment, comprenant une unité submersible de pompage qui est déployée et pilotée par un navire d'assistance et des moyens d'injection de gaz sous pression.

Les moyens d'injection de gaz sous pression peuvent comprendre au moins un ensemble de compresseurs basse-pression et d'unités de générations d'azote qui est installé sur au moins une structure de surface. Alternativement, ces moyens peuvent comprendre un ensemble submersible de bouteilles d'azote à haute-pression qui est déployé par le navire d'assistance.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A à 1C montrent différentes étapes du procédé de vidange selon un mode de réalisation de l'invention ;
- la figure 2 montre les étapes du procédé de vidange selon un autre mode de réalisation de l'invention ; et
- la figure 3 montre les étapes du procédé de vidange selon une variante de réalisation de la figure 2.

### Description détaillée de l'invention

L'invention s'applique à la vidange (partielle ou complète) en immersion de toute canalisation sous-marine utilisée pour le transport de fluide (gaz ou liquide) qui est immergée et est remplie d'eau.

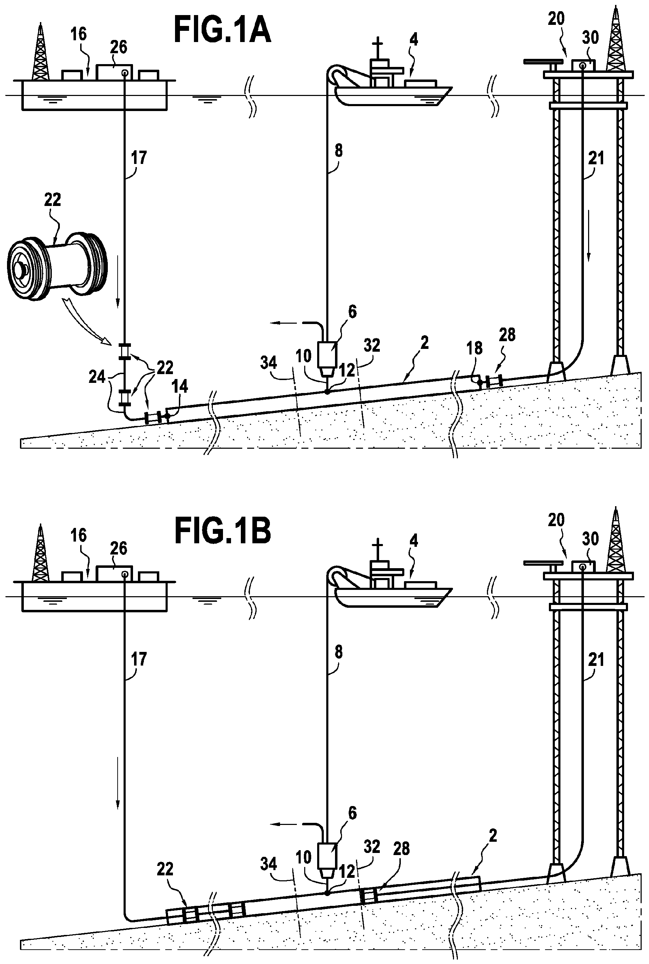

Les figures 1A à 1C représentent, de façon très schématique, différentes étapes de mise en oeuvre du procédé selon un premier mode de réalisation de l'invention pour vidanger de manière complète et définitive une canalisation 2 reposant au fond de la mer et qui a été remplie d'eau.

La canalisation 2 à vidanger peut faire de quelques kilomètres à plusieurs centaines de kilomètres de long et reposer par des profondeurs pouvant aller de la surface jusqu'à plus de 3000m.

Préalablement à sa vidange, la canalisation 2 peut avoir fait l'objet d'épreuves de tests, notamment d'étanchéité et de tenue à la pression. Une fois ces opérations de tests effectuées, il est alors nécessaire de vidanger la canalisation immergée de son eau de test afin de les mettre en production ou de récupérer une de ses extrémités du fond de la mer.

A cet effet, le procédé selon l'invention prévoit de déployer sur le fond marin, à partir d'un navire d'assistance 4 (appelé MSV pour « Multi Service Vessel », c'est-à-dire navire multi-services) positionné en surface à proximité immédiate de la canalisation à vidanger, une unité submersible de pompage 6.

L'unité de pompage 6 est reliée au navire d'assistance 4 par un câble de puissance électrique 8 et est pilotée par celui-ci pour venir se raccorder par un flexible 10 (ou bras de chargement) à la canalisation 2 au premier point de raccordement 12 disponible sur celle-ci. Une telle opération de raccordement est fréquemment utilisée dans le domaine de l'industrie pétrolière offshore et ne sera donc pas décrite en détails.

L'unité de pompage 6 est une unité submersible comprenant par exemple une ou plusieurs pompes de type centrifuge et/ou de type à déplacement positif fonctionnant ici en aspiration et refoulant l'eau aspirée dans la canalisation directement dans la mer. Le débit peut être compris entre 50 et 1000m³/h.

Cette unité de pompage peut par exemple être la même (avec un fonctionnement inversé) que celle usuellement utilisée pour effectuer le remplissage et le raclage des canalisations en eau profonde en maintenant une certaine vitesse d'avance des racleurs (dans ce cas, l'unité de pompage a pour fonction d'aspirer l'eau au-dessus du niveau du fond marin pour l'injecter dans la canalisation et pousser les racleurs).

Par ailleurs, le point 14 de la canalisation 2 à vidanger qui est le plus bas (c'est-à-dire le plus profond) est raccordé à une première structure de surface 16, par exemple à une unité flottante de production, de stockage et de déchargement (FPSO), par l'intermédiaire d'une première conduite 17 (liaison fond-surface).

De même, le point 18 de la canalisation 2 à vidanger qui est le plus haut (c'est-à-dire le plus proche de la surface) est raccordé à une seconde structure de surface 20, par exemple à une plate-forme offshore, par l'intermédiaire d'une seconde conduite 21 (liaison fond-surface).

Ces opérations de raccordement de la canalisation immergée à des structures de surface sont fréquemment utilisées dans le domaine de l'industrie pétrolière offshore et ne seront donc pas décrites en détails.

Le procédé de vidange prévoit alors de lancer un train de racleurs 22 (également appelés « pigs » en anglais) à l'intérieur de la canalisation immergée à partir de la première structure de surface 16 raccordée au point bas 14 de celle-ci.

De tels racleurs sont typiquement utilisés pour nettoyer les canalisations dans le cas de dépôts solides (tels la paraffine ou des hydrates) en agissant de manière très énergique et répétée sans endommager la surface interne des canalisations, ou bien afin de séparer différents fluides.

Dans l'exemple de réalisation des figures 1A à 1C, ce train de racleurs comprend trois racleurs 22 espacés les uns des autres par des tampons d'eau douce 24 (et éventuellement de « MEG » pour Mono Éthylène Glycol, ou de tout autre fluide hydrophile communément utilisé en remplacement de celui-ci selon les besoins du projet) destinés à assurer une désalinisation et un conditionnement de la ligne à un point de rosée équivalent ou inférieur à -20°C à pression atmosphérique de la canalisation 2 à vidanger lors de leur passage à l'intérieur de celle-ci.

Le train de racleurs 22 est poussé à l'intérieur de la canalisation 2 (depuis son point bas 14 en direction de son point haut 18) en injectant derrière celui-ci depuis la première structure de surface 16 du gaz comprimé (air ou azote). A cet effet, dans le cas d'utilisation d'azote, la première structure de surface comprend un ensemble 26 de compresseurs basse-pression et d'unités de générations d'azote relié à la première conduite 17 pour injecter à la suite des racleurs 22 de l'azote à une pression typiquement comprise entre 1 et 50 bars.

De la même façon, le procédé de vidange selon l'invention prévoit de lancer un racleur 28 à l'intérieur de la canalisation immergée 2 à partir de la seconde structure de surface 20 raccordée au point haut 18 de celle-ci.

Ce racleur 28 est alors poussé à l'intérieur de la canalisation en direction de son point bas 14 grâce à l'injection de gaz comprimé (air ou azote) dans la seconde conduite 21 derrière le racleur. A cet effet, dans le cas d'utilisation d'azote, la seconde structure de surface 20 comprend également un ensemble 30 de compresseurs basse-pression et d'unités de générations d'azote relié à la seconde conduite 21 pour injecter de l'azote à une pression typiquement comprise entre 1 et 50 bars à la suite du racleur 28.

Une fois les racleurs 22, 28 lancés à l'intérieur de la canalisation selon des directions opposées, l'unité de pompage 6 raccordée à la canalisation 2 en un point de raccordement 12 situé entre le point bas 14 et le point haut 18 de celle-ci est activée.

L'eau présente dans la canalisation 2 et aspirée par l'unité de pompage 6 est directement refoulée dans la mer. Pendant cette opération, une même pression est maintenue des deux côtés de la canalisation (c'est-à-dire depuis son point bas 14 et son point haut 18 par les ensembles 26, 30 de compresseurs basse-pression et d'unités de générations d'azote) de sorte à compenser la perte de volume d'eau aspiré et à éviter ainsi tout phénomène de cavitation et de désamorçage de l'unité de pompage.

Dès que l'un des racleurs lancés à l'intérieur de la canalisation est détecté à une distance prédéterminée (par exemple comprise entre 200 et 500m) du point de raccordement 12 de l'unité de pompage 6 sur la canalisation, le procédé selon l'invention prévoit d'arrêter l'injection de gaz poussant ce racleur et de débuter une dépressurisation de la partie aval de la canalisation depuis l'extrémité correspondante de celle-ci.

Ainsi, sur l'exemple représenté sur la figure 1B, le racleur 28 lancé depuis la seconde structure de surface 20 est détecté au niveau d'un point 32 de la canalisation située à une distance prédéterminée du point de raccordement 12 de l'unité de pompage 6 sur la canalisation. Cette détection est par exemple réalisée au moyen d'émetteurs ultrason ou électromagnétique (voire de source radioactive) intégrés dans chacun des racleurs et qui sont localisés à l'aide des ROVs (pour « Remote Operated Vehicule », ou robot sous-marin) du navire équipés de récepteurs spécifiques au type d'émetteurs utilisés.

Suite à cette détection, l'ensemble 30 de compresseurs basse-pression et d'unités de générations d'azote installé sur la seconde structure de surface 20 est désactivé pour stopper la progression du racleur et une dépressurisation commence à partir du point haut 18 de la canalisation.

L'unité de pompage 6 continue à aspirer l'eau présente à l'intérieur de la canalisation 2 tant que la présence des autres racleurs 22 lancés depuis la première structure de surface 16 n'a pas été détectée à une distance prédéterminée (par exemple également comprise entre 200 et 500m suivant l'étude de la bathymétrie de la canalisation) du point de raccordement 12 de l'unité de pompage sur la canalisation.

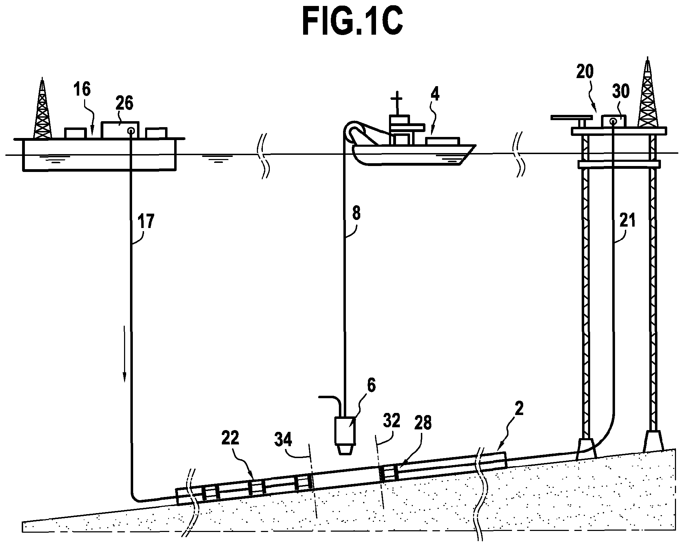

Dès que le premier racleur 22 du train de racleurs lancés depuis la première structure de surface 16 a atteint un point 34 de la canalisation située à une distance prédéterminée du point de raccordement 12 (figure 1C), l'unité de pompage 6 est arrêtée, isolée du système et récupérée par le navire d'assistance 4 sur son pont.

Pendant cette opération, la vidange de la canalisation 2 continue en poursuivant l'injection de gaz sous pression depuis la première structure de surface 16, tout en maintenant la dépressurisation de la canalisation depuis la seconde structure de surface 20. La vidange de la canalisation se poursuit ainsi jusqu'à ce que les racleurs 22, 28 soient récupérés par la seconde structure de surface. La canalisation est alors totalement vidangée de son eau de test et est remplie à la place par de l'azote ou de l'air comprimé et est potentiellement conditionnée avec un point de rosée équivalent à -20°C à pression atmosphérique.

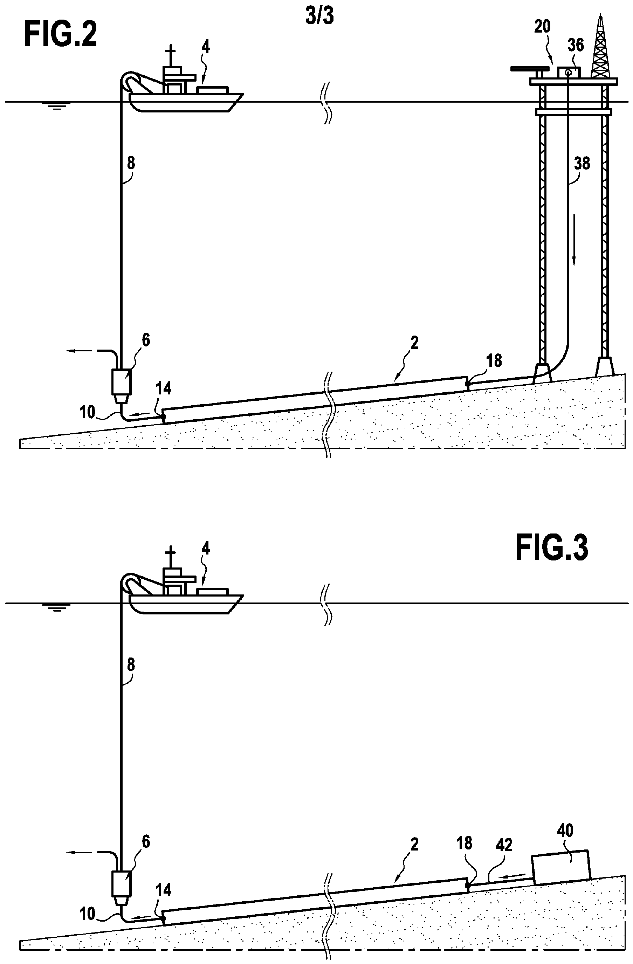

Les figures 2 et 3 illustrent les étapes d'un autre mode de réalisation du procédé selon l'invention pour vidanger de manière partielle une canalisation 2 reposant au fond de la mer et qui a été remplie d'eau.

Le procédé de vidange selon cet autre mode de réalisation est semblable à celui décrit en liaison avec les figures 1A à 1C, à savoir qu'il consiste à pomper une partie de l'eau présente à l'intérieur de la canalisation immergée par une unité submersible de pompage raccordée en un point de la canalisation, le volume d'eau pompé à l'intérieur de la canalisation étant compensé par un gaz injecté sous pression dans la canalisation immergée en un point de celle-ci située plus haut que le point de raccordement à l'unité submersible de pompage. Ce procédé peut s'exécuter avec ou sans racleur pré-chargé dans l'extrémité la plus haute 18 (décision dépendant du profil bathymétrique de la canalisation, notamment présence d'un ou plusieurs point bas locaux).

Le procédé illustré sur la figure 2 s'applique plus particulièrement à une configuration dans laquelle le point le plus haut de la canalisation 2 à vidanger (ou le premier point de raccordement le plus proche du point haut 18 de celle-ci) est proche d'une structure de surface 20 qui peut accueillir des équipements additionnels requis pour cette opération, typiquement une plate-forme offshore.

Dans cette configuration, le navire d'assistance 4 (ou MSV) déploie sur le fond marin l'unité submersible de pompage 6 et vient la raccorder à la canalisation 2 au niveau du point bas 14 de celle-ci (ou du premier point de raccordement le plus proche du point bas) par l'intermédiaire d'un flexible 10 (ou d'un bras de chargement). L'unité de pompage 6 est alimentée et pilotée directement par le navire d'assistance 4 par l'intermédiaire du câble de puissance électrique 8.

Quant à l'introduction de gaz sous pression dans la canalisation immergée 2, elle est réalisée à partir d'un ensemble 36 de compresseurs basse-pression et d'unités de générations d'azote qui est installé sur la structure de surface 20 et qui est raccordé au point haut 18 de la canalisation par un flexible 38.

Une fois les tests prérequis effectués, une équipe présente sur la structure de surface 20 active l'ensemble 36 de compresseurs basse-pression et d'unités de générations d'azote afin de compenser la perte de volume d'eau par de l'azote à une pression relative comprise typiquement entre 1 et 5 bars (mais pouvant éventuellement aller jusqu'à 50 bar si nécessaire).

Le navire d'assistance 4 active alors l'unité de pompage 6 qui vidange la canalisation (l'eau pompée est rejetée directement en mer) jusqu'à ce que le compteur de celle-ci indique qu'un volume prédéterminé d'eau a été pompé correspondant à une valeur prédéterminée de colonne d'eau résiduelle dans la canalisation (par exemple comprise entre 20 et 30m). L'unité de pompage 6 est alors arrêtée et le navire d'assistance isole celle-ci du système avant de la récupérer sur son pont.

Par l'intermédiaire de l'ensemble 36 de compresseurs basse-pression et d'unités de générations d'azote, les personnes présentes sur la structure de surface dépressurisent alors la canalisation 2 partiellement vidangée à une pression prédéterminée pour permettre sa récupération par un navire de pose de canalisation d'une manière contrôlée et sécurisée.

Le procédé illustré sur la figure 3 est une variante du procédé précédemment décrit dans laquelle le point le plus haut de la canalisation 2 à vidanger (ou le premier point de raccordement le plus proche du point haut 18 de celle-ci) est loin de toute structure de surface (ou celle-ci ne peut pas accueillir des équipements additionnels requis pour cette opération).

Dans cette variante de réalisation, l'introduction de gaz sous pression dans la canalisation immergée 2 est réalisée à partir d'un ensemble 40 submersible de bouteilles d'azote à haute-pression « marinisées » (ou d'un appareil sous-pression spécifiquement fabriqué selon le volume requis) qui est déposé sur le fond marin et raccordé au point haut 18 de la canalisation par un flexible 42 (ou un bras de chargement).

Plus précisément, cet ensemble 40 de bouteilles d'azote est préalablement déposé sur le fond marin et connecté au point 18 de la canalisation, par exemple par l'intermédiaire du navire d'assistance 4. Il s'agit d'un ensemble submersible adapté aux grandes profondeurs et dont les bouteilles renferment de l'azote à une très haute pression relative (typiquement de l'ordre de 200-300 bars). Ces bouteilles sont interconnectées au flexible 42 par l'intermédiaire d'un régulateur/détendeur spécifique qui a été préalablement taré en surface à une pression relative adéquate comprise typiquement entre 1 et 5 bars. Quant au flexible 42 (ou bras de chargement), il est bien entendu résistant à l'écrasement généré par la colonne d'eau.

Une fois les tests prérequis effectués, le navire d'assistance 4 active l'unité de pompage 6 qui vidange la canalisation (l'eau pompée est rejetée directement en mer) jusqu'à ce que le compteur de celle-ci indique qu'un volume prédéterminé d'eau a été pompé correspondant à une valeur prédéterminée de colonne d'eau résiduelle dans la canalisation (par exemple comprise entre 20 et 30m).

Pendant cette opération, le volume d'eau pompé à l'intérieur de la canalisation 2 est compensé par l'azote provenant de l'ensemble 40 sous une pression relative de 1 à 5 bars. Aucune action particulière n'est nécessaire ici, le remplissage en azote s'effectuant automatiquement grâce au régulateur/détendeur préalablement taré.

L'unité de pompage 6 est alors arrêtée et le navire d'assistance 4 isole celle-ci du système avant de la récupérer sur son pont. Le navire d'assistance retourne à l'autre extrémité de la canalisation pour isoler l'ensemble 40 de bouteilles d'azote avant de le récupérer également sur son pont.

## Revendications

1. Procédé de vidange d'une canalisation sous-marine (2) de transport de fluide qui est immergée et remplie d'eau, comprenant le pompage d'une partie au moins de l'eau présente à l'intérieur de la canalisation immergée par une unité submersible de pompage (6) raccordée en un point de la canalisation, le volume d'eau pompé à l'intérieur de la canalisation étant compensé par un gaz injecté sous pression dans la canalisation immergée en un point (18) de celle-ci située plus haut que le point de raccordement (12 ; 14) à l'unité submersible de pompage, l'arrêt du pompage de l'eau présente à l'intérieur de la canalisation immergée dès détection qu'un volume prédéterminé d'eau a été pompé par l'unité submersible de pompage en amont et en aval de celle-ci, et l'isolation de l'unité submersible de pompage.

2. Procédé selon la revendication 1, comprenant en outre la dépressurisation de la canalisation immergée qui a été partiellement vidangée à une pression prédéterminée pour permettre son utilisation ultérieure comme canalisation de liaison fond-surface.

3. Procédé selon l'une des revendications 1 et 2, dans lequel l'introduction de gaz sous pression dans la canalisation immergée est réalisée à partir d'un ensemble (36) de compresseurs basse-pression et d'unités de générations d'azote qui est installé sur une structure de surface (20) et raccordé à un point haut (18) de la canalisation par un flexible (38).

4. Procédé selon l'une des revendications 1 et 2, dans lequel l'introduction de gaz sous pression dans la canalisation immergée est réalisée à partir d'un ensemble submersible (40) de bouteilles d'azote à haute-pression qui est déposé sur le fond marin et raccordé à un point haut (18) de la canalisation par un flexible (42).

5. Procédé selon l'une quelconque des revendications 1 à 4, dans lequel l'introduction de gaz dans la canalisation immergée est réalisée à une pression relative estimée comprise entre 1 et 5 bars.

6. Procédé selon l'une quelconque des revendications 1 à 5, dans lequel l'unité submersible de pompage (6) raccordée en un point (10 ; 14) de la canalisation (2) par l'intermédiaire d'un navire d'assistance (4) et est reliée à celui-ci par un câble de puissance électrique (8).

7. Installation pour la mise en oeuvre du procédé selon l'une quelconque des revendications 1 à 6, comprenant une unité submersible de pompage (6) qui est déployée et pilotée par un navire d'assistance (4) et des moyens (30 ; 36 ; 40) d'injection de gaz sous pression.

8. Installation selon la revendication 7, dans laquelle les moyens d'injection de gaz sous pression comprennent au moins un ensemble (26, 30 ; 36) de compresseurs basse-pression et d'unités de générations d'azote qui est installé sur au moins une structure de surface (16, 20).

9. Installation selon la revendication 7, dans laquelle les moyens d'injection de gaz sous pression comprennent un ensemble submersible (40) de bouteilles d'azote à haute-pression qui est déployé par le navire d'assistance (4).
